# EUROPÄISCHE PATENTSCHRIFT

(11) **EP 0 885 789 B1**
(45) Veröffentlichungstag und Bekanntmachung des Hinweises auf die Patenterteilung: **04.02.2004**
(21) Anmeldenummer: 98110482.1
(22) Anmeldetag: 08.06.1998
(51) Int. Cl.: B60S 1/08

(54) **Steuereinrichtung für den Betrieb eines Scheibenwischers in einem Kraftfahrzeug**
Control system for the operation of a windscreen wiper in a vehicle
Système de contrôle pour l'opération d'un essuie-glace dans un véhicule

(30) Priorität: 16.06.1997 DE 19725351
(43) Veröffentlichungstag der Anmeldung: 23.12.1998
(73) Patentinhaber: DaimlerChrysler AG, 70567 Stuttgart (DE)
(72) Erfinder: Berger, Josef, 72649 Wolfschlugen (DE); Blessing, Alf, Dr., 73092 Heiningen (DE); Mauser, Roland, 71640 Ludwigsburg (DE); Mäckel, Rainer, Dr., 53639 Königswinter (DE)

(56) Entgegenhaltungen:
- DE-A- 4 403 661
- DE-A- 19 536 621
- US-A- 5 216 341

## Beschreibung

Die Erfindung betrifft eine Steuereinrichtung für den Betrieb eines Scheibenwischers in einem Kraftfahrzeug gemäß dem Oberbegriff des Anspruchs 1.

Die Scheibenwischer in einem Kraftfahrzeug dienen dazu, dem Fahrer bei Niederschlägen eine optimale Sicht durch die Scheiben zu ermöglichen. Die wichtigste Blickrichtung des Fahrers ist hierbei nach vorn durch die Windschutzscheibe. Die Windschutzscheibe wird normalerweise mit mindestens einem Scheibenwischer, welcher einen Wischerarm, einen Wischermotor, ein Wischergetriebe und ein Wischergestänge umfaßt, gereinigt, wobei der Wischerarm in einem Dauerbetrieb mit festen Wischfrequenzen betrieben werden kann. Zusätzlich kann in der Regel noch ein Einzelwischbetrieb, welcher bei einer Betätigung einer Schalteinrichtung einen einmaligen Wischvorgang durchführt und/oder eine Intervallfunktion, welche einen Wischzyklus mit einer bestimmten Wischzyklusdauer und mit bestimmten Pausenzeiten zwischen zwei Wischzyklen durchführt, ausgewählt werden.

Gesetzlich vorgeschrieben ist, daß bei Scheibenreinigungsanlagen der Scheibenwischer in mindestens zwei Wischfrequenzen funktionieren muß, wobei eine Wischfrequenz mehr als 45 Wischzyklen pro Minute umfassen muß. Die zweite Wischfrequenz darf nicht weniger als 10 Wischzyklen pro Minute und nicht mehr als 55 Wischzyklen pro Minute betragen. Der Unterschied zwischen der größten und der kleinsten Wischfrequenz muß mindestens 15 Wischzyklen pro Minute betragen. Bei der Intervallfunktion muß sichergestellt sein, daß mindestens 10 Wischzyklen pro Minute durchgeführt werden.

Bei Scheibenwischern stellt sich grundsätzlich das Problem, daß einerseits eine möglichst niedrige Wischfrequenz für den Wischerarm gewählt werden sollte, da mit abnehmender Wischf requenz das Wischergebnis besser wird, andererseits darf die Wischfrequenz aber auch nicht zu tief gewählt werden, da dann sogenannte Slip-Stick-Effekte auftreten, welche sich in einem deutlichen Rattern und Springen des Wischerarms äußern. Nach oben ist die Wischfrequenz des Wischerarms durch die Verschlechterung des Wischergebnisses aufgrund von Aquaplaning-Effekten und durch die Auslegung des Wischermotors begrenzt. Da es sich in der Regel nicht um drehzahlgeregelte Wischermotoren handelt, kommt hinzu, daß sich die Wischfrequenz des Wischerarms bei Belastung, beispielsweise durch Windeinwirkungen, den Trocknungsgrad der Scheibe oder durch Schnee, verändert.

Die DE 40 00 735 A1 offenbart eine gattungsgemäße Steuerung für den Betrieb eines Scheibenwischers, mit einer Schalteinrichtung zur Auswahl einer Wischfunktion, mit einer Sensoreinrichtung zur Feststellung eines Benetzungsgrades einer Scheibe und mit einer Auswerteelektronik, wobei der Scheibenwischer in einem Dauerwischbetrieb und/oder in einem Einzelwischbetrieb betrieben werden kann. Bei einer automatischen Wischfunktion wird abhängig vom festgestellten Benetzungsgrad der Scheibe von der Auswerteelektronik zwischen dem Dauerwischbetrieb und dem Einzelwischbetrieb umgeschaltet, wobei abhängig vom festgestellten Benetzungsgrad der Scheibe im Dauerwischbetrieb eine Wischfrequenz eingestellt und im Einzelwischbetrieb ein Wischzyklus für den Wischerarm aktiviert wird.

Als nachteilig wird dabei angesehen, daß keine Maßnahmen vorgesehen sind, wie der Scheibenwischer bei der automatischen Wischfunktion betrieben werden kann, wenn die Sensoreinrichtung ausfällt oder fehlerhaft arbeitet.

Die EP 504 606 B1 offenbart eine Steuereinrichtung für den Betrieb eines Scheibenwischers, bei welcher verschiedene Wischfunktionen mittels einem Betriebsartenschalter eingestellt werden können, wobei mittels einem weiteren Bedienelement Automatikfunktionen, welche die Pausenzeiten im Intervallbetrieb und die Wischfrequenzen im Dauerbetrieb in Abhängigkeit von der Fahrzeuggeschwindigkeit und/oder einem mittels einem Regensensor detektierten Nässegrad verändern, aktiviert werden können. Zusätzlich können abhängig von der eingestellten Wischfunktion mit einem Vorwahlorgan mehrer Pausenzeiten für den Intervallbetrieb und mehrere Wischfrequenzen für den Dauerwischbetrieb manuell eingestellt werden.

Als nachteilig wird dabei angesehen, daß die Bedienung der Scheibenreinigungsanlage sehr aufwendig ist, wodurch der Benutzer vom Verkehrsgeschehen abgelenkt werden kann. Zudem ist die vorgeschlagene Lösung wegen der Verwendung von mehreren Bedienelementen teuer.

Aufgabe der Erfindung ist es, den Bedienungskomfort einer gattungsgemäßen Scheibenreinigungsanlage zu verbessern und die Steuerung der Scheibenreinigungsanlage kostengünstig auszuführen, sowie im Fehlerfall einen bestimmungsgemäßen Betrieb des Scheibenwischers sicherzustellen.

Die Aufgabe wird erfindungsgemäß durch die Merkmale des Anspruchs 1 gelöst. Die Unteransprüche kennzeichnen vorteilhafte Aus- und Weiterbildungen der Erfindung.

Der Hauptgedanke der Erfindung besteht darin, für die Bedienung eines Scheibenwischers eine Schalteinrichtung mit vier Schaltstellungen zur Auswahl einer Wischfunktion ('Aus', 'Optimiertes Wischen', 'Dauerwischen Stufe 1', 'Dauerwischen Stufe 2') durch den Benutzer, sowie eine Sensoreinrichtung zur Feststellung eines Benetzungsgrades einer Scheibe vorzusehen. Um ein verbessertes Wischergebnis zu erzielen wird mittels einer Auswerteelektronik, welche den von der Sensoreinrichtung festgestellten Benetzungsgrad der Scheibe auswertet, eine automatische stufenlose oder eine stufenweise Anpassung der Wischfrequenz an den Benetzungsgrad der Scheibe innerhalb der vom Benutzer ausgewählten Wischfunktion durchgeführt. Die Wischfrequenz ist bei der Wischfunktion 'Dauerwischen Stufe 1' in einem Dauerwischbetrieb innerhalb eines zweiten Wischfrequenzbandes, beispielsweise zwischen f₁ᵤ = 33 und f₁ₒ = 45 Wischzyklen pro Minute, und bei der Wischfunktion 'Dauerwischen Stufe 2' in einem Dauerwischbetrieb innerhalb eines dritten Wischfrequenzbandes, beispielsweise zwischen f₂ᵤ = 48 und f₂ₒ = 60 Wischzyklen pro Minute, an den Benetzungsgrad der Scheibe anpaßbar. Das zweite und das dritte Wischfrequenzband können unmittelbar aneinander angrenzen, sich teilweise überlappen oder voneinander getrennt sein. Bei der Anpassung der Wischfrequenz an den Benetzungsgrad der Scheibe versucht die Auswerteelektronik mittels einer Ansteuerelektronik, welche Teil der Auswerteelektronik sein kann, eine möglichst optimale Wischfrequenz, z. B. eine möglichst lange Wischzyklusdauer, einzustellen. Bei der Wischfunktion 'Optimiertes Wischen' ist die Wischfrequenz bei einem Dauerwischbetrieb innerhalb eines ersten Wischfrequenzbandes, welches das zweite und das dritte Wischfrequenzband umfaßt, beispielsweise zwischen f₁ᵤ = 33 und f₂ₒ = 60 Wischzyklen pro Minute, veränderbar. Zudem ist innerhalb der Wischfunktion 'Optimiertes Wischen' ein Einzelwischbetrieb vorgesehen, wobei im Einzelwischbetrieb ein Wischzyklus und/oder die Dauer des Wischzyklus abhängig vom Benetzungsgrad der Scheibe aktiviert und/oder von der Auswerteelektronik eingestellt wird. Zur Anpassung der Wischfrequenz im Dauerwischbetrieb bzw. zur Aktivierung eines Wischzyklus im Einzelwischbetrieb wird ein Signal der Sensoreinrichtung, welche beispielsweise als optischer Regensensor ausgeführt ist, herangezogen und in der Auswerteelektronik ausgewertet. Der Regensensor liefert ein vom Benetzungsgrad der Scheibe abhängiges Signal, wobei sichergestellt sein muß, daß sich der Regensensor im Bereich des Wischfeldes befindet. Durch diese Maßnahme kann der Betrieb des Scheibenwischers an den Benetzungsgrad der Scheibe und damit an die Stärke des Niederschlags angepaßt werden. Die Verwendung der Schalteinrichtung mit vier Schaltstellungen hat den Vorteil, daß ein Benutzer in gewohnter Weise die Scheibenreinigungsanlage bedienen kann.

Zusätzlich wird durch die Auswerteelektronik sichergestellt, daß bei einem Ausfall oder bei einer Fehlfunktion des Regensensors der Betrieb des Scheibenwischers den gesetzlichen Bestimmungen entspricht, indem bei einem Ausfall oder bei einer Fehlfunktion des Regensensors die Auswerteelektronik bei der Wischfunktion 'Optimiertes Wischen' die Dauer eines Wischzyklus und die Pausendauer zwischen zwei Wischzyklen so einstellt, daß sich mindestens 10 Wischvorgänge pro Minute ergeben, beispielsweise wird die Pausendauer fest auf 4,5 Sekunden und die Dauer des Wischzyklus fest auf 1,5 Sekunden, dies würde einer Wischfrequenz von 40 Wischzyklen pro Minute im Dauerwischbetrieb entsprechen, eingestellt. Bei der Wischfunktion 'Dauerwischen Stufe 1' stellt die Auswerteelektronik eine erste Wischfrequenz, beispielsweise 40 Wischzyklen pro Minute, und bei der Wischfunktion 'Dauerwischen Stufe 2' eine zweite Wischfrequenz, beispielsweise 55 Wischzyklen pro Minute, fest ein. Somit ist ein bestimmungsgemäßer Betrieb der Scheibenreinigungsanlage auch bei einem Ausfall des Regensensors sichergestellt. Der Benutzer kann in diesem Notbetrieb zwischen der Wischfunktion 'Aus' (Betrieb des Scheibenwischers abgeschaltet), der Wischfunktion 'Optimiertes Wischen' mit einem fest eingestellten Intervallbetrieb, der Wischfunktion 'Dauerwischen Stufe 1' mit einer fest eingestellten ersten Wischfrequenz und der Wischfunktion 'Dauerwischen Stufe 2' mit einer fest eingestellten zweiten Wischfrequenz auswählen. Der Ausfall oder die Fehlfunktion des Regensensors kann bei einer internen Systemüberprüfung, welche beispielsweise automatisch nach jedem Fahrzeugstart, beispielsweise durch die Auswerteelektronik, durchgeführt wird, festgestellt werden.

Im Normalbetrieb kann der Benutzer bei beginnendem Regen durch Betätigen der Schalteinrichtung, beispielsweise durch Drehen eines Lenkstockschalthebels, eine Wischfunktion auswählen.

Wird die Schalteinrichtung von der Schaltstellung 0 (Wischfunktion 'Aus') in die Schaltstellung 1 (Wischfunktion 'Optimiertes Wischen') umgeschaltet, so wird, wenn die Auswertung des Sensorsignals der Sensoreinrichtung auch in der Schaltstellung 0 (Wischfunktion 'Aus') durchgeführt wird, abhängig vom Benetzungsgrad der Scheibe ein optimaler Wischbetrieb (Einzelwischbetrieb oder Dauerwischbetrieb) mit einer optimalen Wischzyklusdauer im Einzelwischbetrieb bzw. einer optimalen Wischfrequenz im Dauerwischbetrieb durch die Auswerteelektronik eingestellt. Erfolgt die Auswertung des Sensorsignals nur in den Schaltstellungen 1 bis 3, so wird nach dem Umschalten von der Schaltstellung 0 (Wischfunktion 'Aus') in die Schaltstellung 1 (Wischfunktion 'Optimiertes Wischen') ein Wischzyklus mit einer vorgegebenen Wischzyklusdauer, beispielsweise 1,5 Sekunden, dies entspricht einer Wischfrequenz von 40 Wischzyklen pro Minute im Dauerbetrieb, durchgeführt. Anschließend wird von der Auswerteelektronik das Sensorsignal der Sensoreinrichtung ausgewertet und ein optimaler an den Benetzungsgrad der Scheibe angepaßter Wischbetrieb mit einer optimalen Wischzyklusdauer im Einzelwischbetrieb bzw. einer optimalen Wischfrequenz im Dauerwischbetrieb durch die Auswerteelektronik eingestellt. Die Auswertung des Sensorsignals durch die Auswerteelektronik erfolgt dabei ständig oder in regelmäßigen Abständen. So kann die Auswerteelektronik in der Wischfunktion 'Optimiertes Wischen' ohne Eingriff durch den Benutzer alle Umschalt- und/oder Anpassungsvorgänge zum optimalen Betrieb des Scheibenwischers durchführen, um immer ein optimales Wischergebnis in Abhängigkeit vom Benetzungsgrad der Scheibe zu erzielen.

Wird die Schalteinrichtung von der Schaltstellung 0 (Wischfunktion 'Aus') in die Schaltstellung 2 (Wischfunktion 'Dauerwischen Stufe 1') umgeschaltet, so wird, wenn die Auswertung des Sensorsignals der Sensoreinrichtung auch in der Schaltstellung 0 (Wischfunktion 'Aus') durchgeführt wird, abhängig vom Benetzungsgrad der Scheibe eine optimale Wischfrequenz innerhalb des zweiten Wischfrequenzbandes durch die Auswerteelektronik eingestellt. Erfolgt die Auswertung des Sensorsignals nur in den Schaltstellungen 1 bis 3, so wird nach dem Umschalten von der Schaltstellung 0 (Wischfunktion 'Aus') in die Schaltstellung 2 (Wischfunktion 'Dauerwischen Stufe 1') eine erste mittlere Wischfrequenz, beispielsweise 40 Wischzyklen pro Minute, eingestellt. Anschließend wird von der Auswerteelektronik das Sensorsignal der Sensoreinrichtung ausgewertet und eine optimale an den Benetzungsgrad der Scheibe angepaßte Wischfrequenz innerhalb des zweiten Wischfrequenzbandes eingestellt.

Wird die Schalteinrichtung von der Schaltstellung 1 (Wischfunktion 'Optimiertes Wischen') in die Schaltstellung 2 (Wischfunktion 'Dauerwischen Stufe 1') umgeschaltet, so wird, wenn die aktuelle Wischzyklusdauer einer Wischfrequenz aus dem zweiten Wischfrequenzband entspricht, diese Wischfrequenz übernommen oder, wenn die aktuelle Wischzyklusdauer einer Wischfrequenz aus dem dritten Wischfrequenzband entspricht, diese Wischfrequenz um eine vorgegebene Anzahl 'm' von Wischzyklen pro Minute reduziert und als neue Wischfrequenz durch die Auswerteelektronik eingestellt. Entspricht die aktuelle Wischzyklusdauer einer Wischfrequenz, welche zwischen dem zweiten und dem dritten Frequenzband liegt, so wird diese Wischfrequenz um eine vorgegebene Anzahl 'z' von Wischzyklen pro Minute reduziert und als neue Wischfrequenz durch die Auswerteelektronik eingestellt. Die Zahlenwerte 'm' und 'z' sind dabei so festgelegt, daß die neue Wischfrequenz innerhalb des zweiten Wischfrequenzbandes liegt. Anschließend wird von der Auswerteelektronik das Sensorsignal der Sensoreinrichtung ständig ausgewertet und eine optimale an den Benetzungsgrad der Scheibe angepaßte Wischfrequenz innerhalb des zweiten Wischfrequenzbandes eingestellt.

Wird die Schalteinrichtung von der Schaltstellung 0 (Wischfunktion 'Aus') in die Schaltstellung 3 (Wischfunktion 'Dauerwischen Stufe 2') umgeschaltet, so wird, wenn die Auswertung des Sensorsignals der Sensoreinrichtung auch in der Schaltstellung 0 (Wischfunktion 'Aus') durchgeführt wird, abhängig vom Benetzungsgrad der Scheibe eine optimale Wischfrequenz innerhalb des dritten Wischfrequenzbandes durch die Auswerteelektronik eingestellt. Erfolgt die Auswertung des Sensorsignals nur in den Schaltstellungen 1 bis 3, so wird nach dem Umschalten von der Schaltstellung 0 (Wischfunktion 'Aus') in die Schaltstellung 3 (Wischfunktion 'Dauerwischen Stufe 2') eine zweite mittlere Wischfrequenz, beispielsweise 55 Wischzyklen pro Minute, eingestellt. Anschließend wird von der Auswerteelektronik das Sensorsignal der Sensoreinrichtung ausgewertet und eine optimale an den Benetzungsgrad der Scheibe angepaßte Wischfrequenz innerhalb des dritten Wischfrequenzbandes eingestellt.

Wird die Schalteinrichtung von der Schaltstellung 1 (Wischfunktion 'Optimiertes Wischen') in die Schaltstellung 3 (Wischfunktion 'Dauerwischen Stufe 2') umgeschaltet, so wird, wenn die aktuelle Wischzyklusdauer einer Wischfrequenz aus dem dritten Wischfrequenzband entspricht, diese Wischfrequenz übernommen oder, wenn die aktuelle Wischzyklusdauer einer Wischfrequenz aus dem zweiten Wischfrequenzband entspricht, diese Wischfrequenz um eine vorgegebene Anzahl 'n' von Wischzyklen pro Minute erhöht und als neue Wischfrequenz durch die Auswerteelektronik eingestellt. Entspricht die aktuelle Wischzyklusdauer einer Wischfrequenz, welche zwischen dem zweiten und dem dritten Frequenzband liegt, so wird diese Wischfrequenz um eine vorgegebene Anzahl 'z' von Wischzyklen pro Minute erhöht und als neue Wischfrequenz durch die Auswerteelektronik eingestellt. Die Zahlenwerte 'n' und 'z' sind dabei so festgelegt, daß die neue Wischfrequenz innerhalb des dritten Wischfrequenzbandes liegt. Anschließend wird von der Auswerteelektronik das Sensorsignal der Sensoreinrichtung ständig ausgewertet und eine optimale an den Benetzungsgrad der Scheibe angepaßte Wischfrequenz innerhalb des dritten Wischfrequenzbandes eingestellt.

Wird die Schalteinrichtung von der Schaltstellung 2 (Wischfunktion 'Dauerwischen Stufe 1') in die Schaltstellung 3 (Wischfunktion 'Dauerwischen Stufe 2') umgeschaltet, so wird die aktuelle Wischfrequenz um eine vorgegebene Anzahl 'n' von Wischzyklen pro Minute erhöht und als neue Wischfrequenz durch die Auswerteelektronik eingestellt. Anschließend wird von der Auswerteelektronik das Sensorsignal der Sensoreinrichtung ständig ausgewertet und eine optimale an den Benetzungsgrad der Scheibe angepaßte Wischfrequenz innerhalb des dritten Wischfrequenzbandes eingestellt.

Wird die Schalteinrichtung von der Schaltstellung 3 (Wischfunktion 'Dauerwischen Stufe 2') in die Schaltstellung 2 (Wischfunktion 'Dauerwischen Stufe 1') umgeschaltet, so wird die aktuelle Wischfrequenz um eine vorgegebene Anzahl 'm' von Wischzyklen pro Minute reduziert und als neue Wischfrequenz durch die Auswerteelektronik eingestellt. Anschließend wird von der Auswerteelektronik das Sensorsignal der Sensoreinrichtung ständig ausgewertet und eine optimale an den Benetzungsgrad der Scheibe angepaßte Wischfrequenz innerhalb des zweiten Wischfrequenzbandes eingestellt.

Wird die Schalteinrichtung von der Schaltstellung 3 (Wischfunktion 'Dauerwischen Stufe 2') oder von der Schaltstellung 2 (Wischfunktion 'Dauerwischen Stufe 1') in die Schaltstellung 1 (Wischfunktion 'Optimiertes Wischen') umgeschaltet, so wird die jeweilige Wischzyklusdauer der aktuellen Wischfrequenz übernommen. Anschließend wird von der Auswerteelektronik abhängig vom Benetzungsgrad der Scheibe ein optimaler Wischbetrieb (Einzelwischbetrieb oder Dauerwischbetrieb) mit einer optimalen Wischzyklusdauer im Einzelwischbetrieb bzw. einer optimalen Wischfrequenz aus dem ersten Wischfrequenzband im Dauerwischbetrieb eingestellt.

Die Erfindung wird nachfolgend anhand der Zeichnung näher erläutert. Es zeigen:
- Fig. 1: Eine schematische Darstellung einer Ausführungsform der Erfindung;
- Fig. 2: Ein Diagramm zur schematischen Darstellung der Wischfrequenzen innerhalb der auswählbaren Wischfunktionen;
- Fig. 3: Eine schematische Darstellung des Umschaltvorgangs zwischen zwei Wischfunktionen im Dauerwischbetrieb.

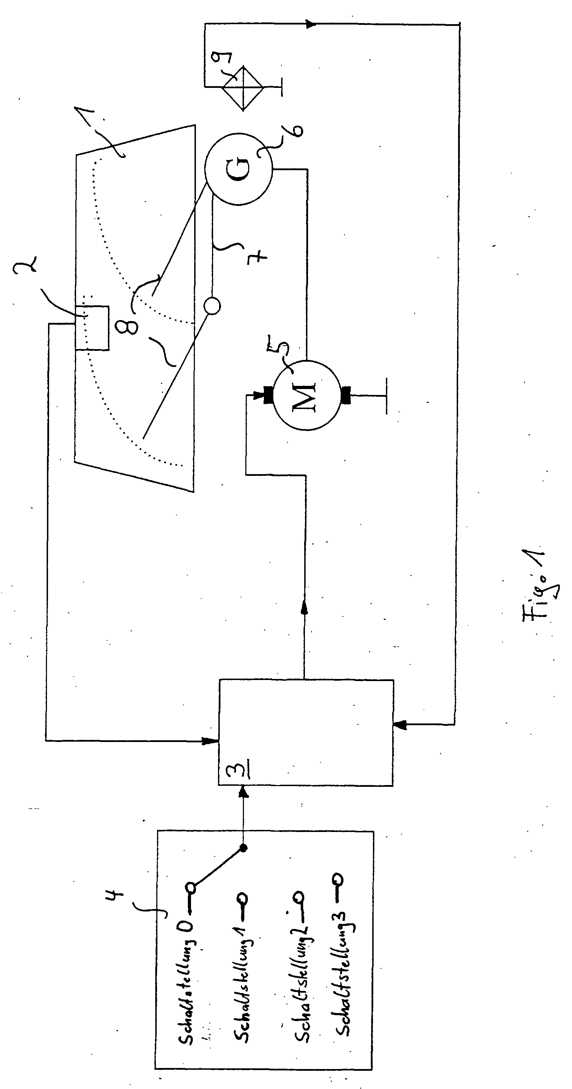

Wie aus der Fig. 1 ersichtlich ist, umfaßt die Steuereinrichtung für einen Scheibenwischer eine Scheibe 1 mit einer Sensoreinrichtung 2, welche den Benetzungsgrad der Scheibe 1 ermittelt und mittels einem zum Benetzungsgrad der Scheibe 1 propotionalen Signal an eine Auswerteelektronik 3 weiterleitet. Im Ausführungsbeispiel ist die Sensoreinrichtung 2 als optischer Sensor ausgeführt. Aus diesem Signal bestimmt die Auswerteelektronik 3 die optimale Wischzyklusdauer sowie den Zeitpunkt der Aktivierung eines Wischzyklus im Einzelwischbetrieb oder die optimale Wischfrequenz im Dauerwischbetrieb für die jeweilige ausgewählte Wischfunktion. Die Auswahl der Wischfunktion durch den Benutzer erfolgt mittels einer Schalteinrichtung 4, welche beispielsweise als Lenkstockschalthebel ausgeführt ist und die in der Darstellung über vier Schaltstellungen verfügt, wobei eine erste Schaltstellung (0) einer Wischfunktion 'Aus', welche einem ausgeschalteten Betrieb des Scheibenwischers entspricht, zugeordnet ist, wobei eine zweite Schaltstellung (1) einer Wischfunktion 'Optimiertes Wischen' zugeordnet ist, wobei eine dritte Schaltstellung (2) einer Wischfunktion 'Dauerwischen Stufe 1' zugeordnet ist und wobei eine vierte Schaltstellung (3) einer Wischfunktion 'Dauerwischen Stufe 2' zugeordnet ist. Die ständige Auswertung des Sensorsignals der Sensoreinrichtung 2 durch die Auswerteelektronik erfolgt bei dem beschriebenen Ausführungsbeispiel nur in den Schaltstufen 1 bis 3. Es ist aber auch vorstellbar, die ständige Auswertung des Sensorsignals bei eingeschalteter Zündung auch in der Schaltstellung 0 durchzuführen. Dies hat den Vorteil, daß direkt nach dem Umschalten der Schalteinrichtung von der Schaltstellung 0 in eine der Schaltstellungen 1 bis 3 eine an den Benetzungsgrad der Scheibe angepaßte Einstellung der Wischfrequenz für einen Dauerwischbetrieb bzw. der Wischzyklusdauer für den Einzelwischbetrieb vorgenommen werden kann. Die Einstellung der Wischfrequenz bzw. der Wischzyklusdauer und die Aktivierung eines Wischzyklus erfolgt mittels einer Ansteuerelektronik, welche beim Ausführungsbeispiel Teil der Auswerteelektronik 3 ist. Die Ansteuerelektronik steuert den Wischermotor 5 mit einer geregelten Spannung an, beispielsweise durch eine Pulsweitenmodulation, und erlaubt somit eine Einstellung der Drehzahl des Wischermotors 5 und damit die Einstellung der Wischfrequenz und der Wischzykluszeit durch Veränderung der Regelspannung. Der Wischermotor 5 ist über ein Getriebe 6 an das Wischergestänge 7 gekoppelt. An dem Wischergestänge 7 sind Wischerarme 8 befestigt. Mit Hilfe eines Drehzahlsensors 9 kann die Motor- und/oder Getriebedrehzahl ermittelt und an die Auswerteelektronik 3 weitergeleitet werden. Hieraus kann dann auf die Geschwindigkeit der Wischerarme 8 und auf die Wischfrequenz zurückgeschlossen werden. Diese kann dann durch eine entsprechende Änderung der Regelspannung an den aktuellen Bedarf angepaßt werden. Zusätzlich führt die Auswerteelektronik regelmäßig, beispielsweise bei jedem Fahrzeugstart, eine Systemüberprüfung durch. Wird bei dieser Systemüberprüfung eine fehlerhafte Sensoreinrichtung oder ein Ausfall der Sensoreinrichtung festgestellt, so schaltet die Auswerteelektronik in einen Notbetrieb um. Dies kann dem Benutzer durch entsprechende optische oder akustische Anzeigemittel mitgeteilt werden. Im Notbetrieb ist vorgesehen, den Scheibenwischer in der Schaltstellung 1 in einem Intervallbetrieb mit einer festen Wischzyklusdauer, z. B. 1,5 Sekunden, und mit einer festen Pausendauer zwischen zwei Wischzyklen, z. B. 4,5 Sekunden, zu betreiben, damit sich mindestens 10 Wischzyklen pro Minute ergeben. In der Schaltstellung 2 wird der Scheibenwischer im Dauerwischbetrieb mit einer festen Wischfrequenz f₁, z. B. 40 Wischzyklen pro Minute, und in der Schalterstellung 3 wird der Scheibenwischer im Dauerwischbetrieb mit einer festen Wischfrequenz f₂, z. B. 55 Wischzyklen pro Minute, betrieben. Die Schaltstellung 0 entspricht weiterhin dem ausgeschalteten Betrieb des Scheibenwischers.

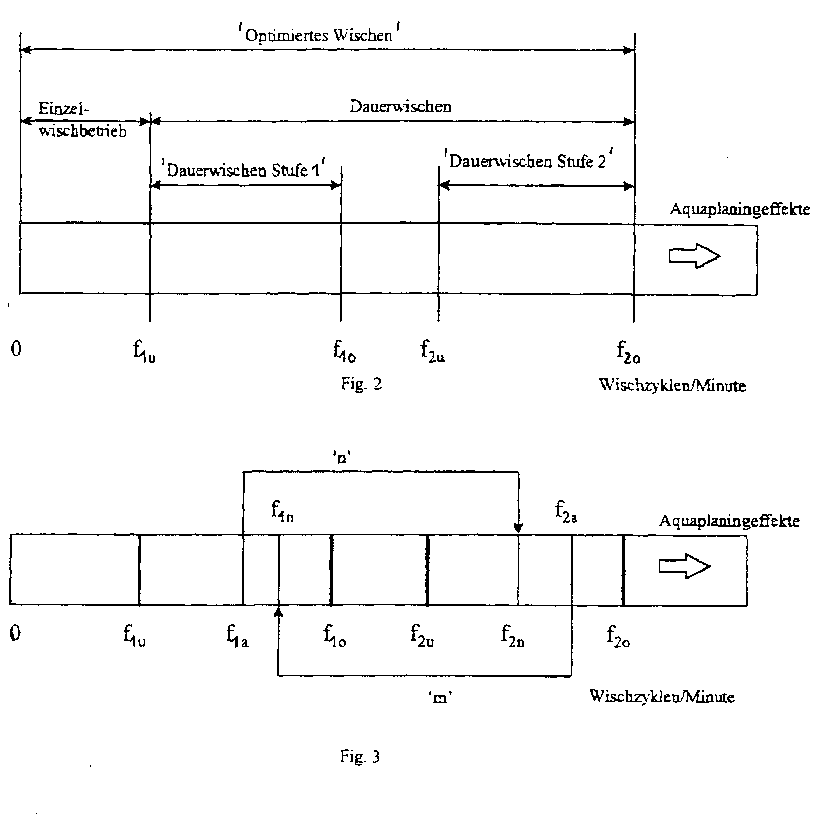

Fig. 2 zeigt in schematischer Darstellung ein Diagramm der mit dem Schaltmittel 4 durch den Benutzer auswählbaren Wischfunktionen und den zugeordneten Wischfrequenzen für den Wischerarm.

Wie aus Fig. 2 ersichtlich kann bei der Wischfunktion 'Dauerwischen Stufe 1' im Dauerwischbetrieb eine optimale Wischfrequenz innerhalb eines zweiten Wischfrequenzbandes, welches nach unten durch die kleinste Wischfrequenz f₁ᵤ und nach oben durch eine Wischfrequenz f₁ₒ begrenzt ist, abhängig vom Benetzungsgrad der Scheibe 1 eingestellt werden. Beim Umschalten von der Wischfunktion 'Aus' in die Wischfunktion 'Dauerwischen Stufe 1' wird zunächst eine erste mittlere Wischfrequenz f₁, z. B. 40 Wischzyklen pro Minute, eingestellt. Diese Wischfrequenz kann der fest eingestellten Wischfrequenz für den Notbetrieb entsprechen. Nach dem ersten Wischzyklus wird dann die aktuelle Wischfrequenz durch Auswertung des Sensorsignals von der Sensoreinrichtung mittels der Auswerteelektronik an den Benetzungsgrad der Scheibe 1 innerhalb des zweiten Wischfrequenzbandes angepaßt.

Wie weiter aus Fig. 2 ersichtlich ist, kann bei der Wischfunktion 'Dauerwischen Stufe 2' im Dauerwischbetrieb die optimale Wischfrequenz innerhalb eines dritten Wischfrequenzbandes, welches nach unten durch die Wischfrequenz f₂ᵤ und nach oben durch eine größte Wischfrequenz f₂ₒ begrenzt ist, abhängig vom Benetzungsgrad der Scheibe 1 eingestellt werden. Beim Umschalten von der Wischfunktion 'Aus' in die Wischfunktion 'Dauerwischen Stufe 2' wird zunächst eine zweite mittlere Wischfrequenz f₂, z. B. 55 Wischzyklen pro Minute, eingestellt. Diese Wischfrequenz kann der fest eingestellten Wischfrequenz für den Notbetrieb entsprechen. Nach dem ersten Wischzyklus wird dann die aktuelle Wischfrequenz durch die Auswertung des Sensorsignals von der Sensoreinrichtung mittels der Auswerteelektronik an den Benetzungsgrad der Scheibe 1 innerhalb des dritten Wischfrequenzbandes angepaßt.

Wie aus Fig. 3 ersichtlich ist, wird beim Umschalten von der Wischfunktion 'Dauerwischen Stufe 1' in die Wischfunktion 'Dauerwischen Stufe 2' die aktuelle Wischfrequenz f₁ₐ aus dem zweiten Wischfrequenzband um 'n' Wischzyklen pro Minute erhöht. Die neue aktuelle Wischfrequenz f₂ₙ liegt nun innerhalb des dritten Wischfrequenzbandes und wird durch die Auswertung des Sensorsignals von der Sensoreinrichtung mittels der Auswerteelektronik 3 an den Benetzungsgrad der Scheibe 1 innerhalb des dritten Wischfrequenzbandes angepaßt. Analog wird beim Umschalten von der Wischfunktion 'Dauerwischen Stufe 2' in die Wischfunktion 'Dauerwischen Stufe 1' die aktuelle Wischfrequenz f₂ₐ aus dem zweiten Wischfrequenzband um 'm' Wischzyklen pro Minute reduziert und die neue aktuelle Wischfrequenz f₁ₙ wird innerhalb des zweiten Wischfrequenzbandes an den Benetzungsgrad der Scheibe 1 angepaßt.

Zudem ist aus Fig. 2 ersichtlich, daß die Wischfunktion 'Optimiertes Wischen' einen Einzelwischbetrieb und einen Dauerwischbetrieb umfaßt. Abhängig vom Benetzungsgrad der Scheibe 1 wird bei der Wischfunktion 'Optimiertes Wischen' im Dauerwischbetrieb eine optimale Wischfrequenz innerhalb des ersten Wischfrequenzbandes eingestellt. Der mögliche Einstellbereich der Wischfrequenz im Dauerbetrieb ist deshalb nach unten durch die kleinste Wischfrequenz f₁ᵤ und nach oben durch die größte Wischfrequenz f₂ₒ begrenzt. Die kleinste mögliche Wischfrequenz f₁ᵤ ist so gewählt, daß keine Slip-Stick-Effekte während dem Dauerwischbetrieb auftreten können und beträgt beispielsweise 33 Wischzyklen pro Minute. Die größte mögliche Wischfrequenz f₂ₒ ist so gewählt, daß keine Aquaplaningeffekte auftreten können. Ergibt die Auswertung des Sensorsignals der Sensoreinrichtung 2, daß die optimale Wischfrequenz für den Benetzungsgrad der Scheibe 1 kleiner als die kleinste Wischfrequenz f₁ᵤ ist, so wird automatisch in den Einzelwischbetrieb umgeschaltet. Im Einzelwischbetrieb werden abhängig vom Benetzungsgrad der Scheibe 1 einzelne Wischzyklen aktiviert, welche durch unterschiedliche oder durch gleiche Pausendauern von einander getrennt sind. Die Wischzyklusdauer ist ebenfalls vom Benetzungsgrad der Scheibe abhängig.

Beim Umschalten von der Wischfunktion 'Aus' in die Wischfunktion 'Optimiertes Wischen' wird zunächst eine mittlere Wischzyklusdauer von beispielsweise 1,5 Sekunden, dies entspricht einer Wischfrequenz von 40 Wischzyklen pro Minute im Dauerwischbetrieb, eingestellt. Anschließend wird abhängig vom Benetzungsgrad der Scheibe 1 ein optimaler Betrieb des Scheibenwischers eingestellt. Beim Umschalten von der Wischfunktion Dauerwischen Stufe 1' bzw. von der Wischfunktion 'Dauerwischen Stufe 2' in die Wischfunktion 'Optimiertes Wischen', wird zunächst die Wischzyklusdauer der aktuellen Wischfrequenz übernommen und anschließend wird abhängig vom Benetzungsgrad der Scheibe 1 ein optimaler Betrieb des Scheibenwischers eingestellt. Beim Umschalten von der Wischfunktion 'Optimiertes Wischen' in die Wischfunktion 'Dauerwischen Stufe 1' bzw. in die Wischfunktion 'Dauerwischen Stufe 2' wird, wenn die aktuelle Wischzykluszeit der Wischfunktion 'Optimiertes Wischen' einer Wischfrequenz aus dem neu ausgewählten Wischfrequenzband entspricht, diese Wischfrequenz als aktuelle Wischfrequenz für den Dauerbetrieb übernommen. Entspricht die aktuelle Wischzyklusdauer der Wischfunktion 'Optimiertes Wischen' einer Wischfrequenz aus dem ersten oder dem zweiten Wischfrequenzband, wobei die Wischfrequenz nicht in dem ausgewählten Wischfrequenzband liegt, so wird analog zur Vorgehensweise beim Umschalten zwischen den Wischfunktionen 'Dauerwischen Stufe 1' und 'Dauerwischen Stufe 2' die aktuelle Wischfrequenz um 'n' Wischzyklen erhöht bzw. um 'm' Wischzyklen reduziert, um den Scheibenwischer im ausgewählten Wischfrequenzband zu betreiben, wobei die Zahlenwerte für 'n' und 'm' so vorgegeben sind, daß das gewünschte Wischfrequenzband nach dem Umschalten erreicht wird. Entspricht die aktuelle Wischzyklusdauer der Wischfunktion 'Optimiertes Wischen' einer Wischfrequenz, welche zwischen dem zweiten und dem dritten Frequenzband, also einer Wischfrequenz zwischen f₁ₒ und f₂ᵤ, so wird die aktuelle Wischfrequenz entweder um 'z' Wischzyklen pro Minute erhöht, wenn in die Wischfunktion 'Dauerwischen Stufe 2' umgeschaltet wurde, oder um 'z' Wischzyklen pro Minute reduziert, wenn in die Wischfunktion 'Dauerwischen Stufe 1' umgeschaltet wurde, wobei der Zahlenwert für 'z' so vorgegeben ist, daß das gewünschte Wischfrequenzband nach dem Umschalten erreicht wird. Als weitere Möglichkeit kann in diesem Fall die aktuelle Wischfrequenz beim Umschalten in die Wischfunktion 'Dauerwischen Stufe 1' auf die obere Wischfrequenz f₁ₒ des zweiten Wischfrequenzbandes und beim Umschalten in die Wischfunktion 'Dauerwischen Stufe 2' auf die untere Wischfrequenz f₂ᵤ des dritten Wischfrequenzbandes eingestellt werden.

## Patentansprüche

1. Steuereinrichtung für den Betrieb eines Scheibenwischers in einem Kraftfahrzeug mit einer Schalteinrichtung (4) zur Auswahl mehrerer Wischfunktionen, mit einer Sensoreinrichtung (2) zur Feststellung eines Benetzungsgrades einer Scheibe (1) und mit einer Auswerteelektronik (3), wobei der Scheibenwischer abhängig von der vom Benutzer gewählten Wischfunktion in einem Dauerwischbetrieb und/oder in einem Einzelwischbetrieb betrieben werden kann, und wobei die Auswerteelektronik (3) bei einer ersten Wischfunktion den festgestellten Benetzungsgrad der Scheibe (1) auswertet und abhängig vom festgestellten Benetzungsgrad der Scheibe (1) in einem Dauerwischbetrieb eine Wischfrequenz einstellt und/oder in einem Einzelwischbetrieb einen Wischzyklus für den Scheibenwischer aktiviert,
**dadurch gekennzeichnet,**
**daß** die Auswerteelektronik (3) die Wischfrequenz (f) des Scheibenwischers im Dauerwischbetrieb bei der ersten Wischfunktion innerhalb eines ersten Wischfrequenzbandes (f₁ᵤ bis f₂ₒ), bei einer zweiten Wischfunktion innerhalb eines zweiten Wischfrequenzbandes (f₁ᵤ bis f₁ₒ) und bei einer dritten Wischfunktion innerhalb eines dritten Wischfrequenzbandes (f₂ᵤ bis f₂ₒ) einstellt, wobei abhängig von der Auswertung des Benetzungsgrades der Scheibe (1) eine möglichst niedrige aktuelle Wischfrequenz eingestellt wird, und wobei, wenn beim Umschalten zwischen den Wischfunktionen ein Wechsel des Wischfrequenzbandes erforderlich ist, die aktuelle Wischfrequenz bei einem Wechsel vom zweiten Wischfrequenzband (f₁ᵤ bis f₁ₒ) zum dritten Wischfrequenzband (f₂ᵤ bis f₂ₒ) um eine bestimmte Anzahl 'n' Wischzyklen pro Minute erhöht oder bei einem Wechsel vom dritten Wischfrequenzband (f₂ᵤ bis f₂ₒ) zum zweiten Wischfrequenzband (f₁ᵤ bis f₁ₒ) um eine bestimmte Anzahl 'm' Wischzyklen pro Minute verringert wird.

2. Steuereinrichtung für den Betrieb eines Scheibenwischers in einem Kraftfahrzeug nach Anspruch 1,
**dadurch gekennzeichnet,**
**daß** beim Umschalten von der zweiten oder dritten Wischfunktion in die erste Wischfunktion die jeweilige Wischzyklusdauer der eingestellten aktuellen Wischfrequenz für den Einzelwischbetrieb oder die jeweilige aktuelle Wischfrequenz für den Dauerwischbetrieb übernommen wird.

3. Steuereinrichtung für den Betrieb eines Scheibenwischers in einem Kraftfahrzeug nach Anspruch 1,
**dadurch gekennzeichnet,**
**daß** beim Umschalten von der ersten Wischfunktion in die zweite oder dritte Wischfunktion, wenn die aktuelle Wischzyklusdauer einer aktuellen Wischfrequenz, welche zwischen dem zweiten und dem dritten Frequenzband (zwischen f₁ₒ und f₂ᵤ) liegt, entspricht, die aktuelle Wischfrequenz entweder um 'z' Wischzyklen pro Minute erhöht wird, wenn von der ersten Wischfunktion in die dritte Wischfunktion umgeschaltet wird, oder um 'z' Wischzyklen pro Minute reduziert wird, wenn von der ersten Wischfunktion in die zweite Wischfunktion umgeschaltet wird, wobei der Zahlenwert für 'z' so vorgegeben ist, daß die neue Wischfrequenz nach dem Umschalten im gewünschten Wischfrequenzband liegt.

4. Steuereinrichtung für den Betrieb eines Scheibenwischers in einem Kraftfahrzeug nach Anspruch 1,
**dadurch gekennzeichnet,**
**daß** in einem Notbetrieb bei der ersten Wischfunktion eine feste Wischzyklusdauer und eine feste Pausendauer zwischen zwei Wischzyklen und bei der zweiten Wischfunktion ein Dauerwischbetrieb mit einer ersten festen Wischfrequenz und bei der dritten Wischfunktion ein Dauerwischbetrieb mit einer zweiten festen Wischfrequenz durch die Auswerteelektronik (3) eingestellt wird, wobei die Differenz zwischen der ersten und der zweiten festen Wischfrequenz 'n' Wischzyklen pro Minute entspricht.

5. Steuereinrichtung für den Betrieb eines Scheibenwischers in einem Kraftfahrzeug nach Anspruch 1,
**dadurch gekennzeichnet,**
**daß** die Auswertung des Benetzungsgrades der Scheibe (1) auch während der Wischfunktion 'Aus', welche einem ausgeschalteten Betrieb des Scheibenwischers entspricht, durchgeführt wird.

## Claims

1. Control unit for the operation of a windscreen wiper in a motor vehicle, with a switching device (4) for the selection of several wiper functions, with a sensor device (2) for determining the wetness of a windscreen (1), and with an evaluation electronics system (3), such that depending on the wiper function selected by the user, the windscreen wiper can be operated in a constant-wipe mode and/or in an intermittent-wipe mode, and such that in a first wiper function the evaluation electronics system (3) evaluates the wetness of the windscreen (1) determined and, depending on the determined wetness ofthe windscreen (1), sets a wiping frequency in a constant-wipe mode and/or actuates a wipe cycle for the windscreen wiper in an intermittent-wipe mode,
**characterised in that**
in the constant-wipe mode the evaluation electronics system (3) sets the wiping frequency (f) of the windscreen wiper within a first wiping frequency range (f₁ᵤ to f₂ₒ) in a first wiper function, within a second wiping frequency range (f₁ᵤ to f₁ₒ) in a second wiper function, and within a third wiping frequency range (f₂ᵤ to f₂ₒ) in a third wiper function, such that depending on the evaluation of the wetness of the windscreen (1), the lowest acceptable current wiping frequency is set, and such that when switching between wiper functions necessitates a change of the wiping frequency range, the current wiping frequency is increased by a given number 'n' of wipe cycles per minute when changing from the second wiping frequency range (f₁ᵤ to f₁ₒ) to the third wiping frequency range (f₂ᵤ to f₂ₒ), or is reduced by a given number 'm' of wipe cycles per minute when changing from the third wiping frequency range (f₂ᵤ to f₂ₒ) to the second wiping frequency range (f₁ᵤ to f₁ₒ).

2. Control unit for the operation of a windscreen wiper in a motor vehicle according to Claim 1,
**characterised in that**
when switching from the second or third wiper function to the first wiper function, the respective wipe cycle duration of the set current wiping frequency is adopted for the intermittent-wipe mode or the respective current wiping frequency is adopted for the constant-wipe mode.

3. Control unit for the operation of a windscreen wiper in a motor vehicle according to Claim 1,
**characterised in that**
when switching from the first wiper function to the second or third wiper function, if the current wipe cycle duration corresponds to a current wiping frequency that lies between the second and third frequency ranges (between f₁ₒ and f₂ᵤ), the current wiping frequency is either increased by 'z' wipe cycles per minute when switching from the first wiper function to the third wiper function, or reduced by 'z' wipe cycles per minute when switching from the first wiper function to the second wiper function, the value 'z' being chosen such that after switching, the new wiping frequency lies within the desired wiping frequency range.

4. Control unit for the operation of a windscreen wiper in a motor vehicle according to Claim 1,
**characterised in that**
in emergency operation, during the first wiper function the evaluation electronics system (3) sets a fixed wipe cycle duration and a fixed pause duration between two wipe cycles, during the second wiper function is sets a constant-wipe mode with a first fixed wiping frequency, and during the third wiper function it sets a constant-wipe mode with a second fixed wiping frequency, such that the difference between the said first and second fixed wiping frequencies is 'n' wipe cycles per minute.

5. Control unit for the operation of a windscreen wiper in a motor vehicle according to Claim 1,
**characterised in that**
the wetness of the windscreen (1) is also evaluated during the wiper function 'Off setting, which is when the operation of the windscreen wiper is switched off.

## Revendications

1. Dispositif de commande du fonctionnement d'un essuie-glace dans un véhicule automobile, comprenant une unité de commutation (4) pour sélectionner plusieurs fonctions de balayage, une unité de capteurs (2) destinée à détecter l'intensité du mouillage d'une vitre (1) et une unité électronique d'analyse (3), sachant que, compte tenu de la fonction de balayage sélectionnée par l'usager, l'essuie-glace peut être actionné dans un mode de balayage continu et/ou un mode de balayage isolé, et l'unité électronique d'analyse (3), dans une première fonction de balayage, analyse l'intensité du mouillage détectée sur la vitre (1) et, en fonction de l'intensité du mouillage détectée sur la vitre (1), dans un mode de balayage continu, commande une fréquence de balayage et/ou, dans un mode de balayage isolé, active un cycle de balayage pour l'essuie-glace, **caractérisé en ce que** l'unité électronique d'analyse (3), dans le mode de balayage continu, règle la fréquence de balayage (f) de l'essuie-glace pour la première fonction de balayage à l'intérieur d'une première bande de fréquences (f₁ᵤ à f₂₀), pour une deuxième fonction de balayage à l'intérieur d'une deuxième bande de fréquences (f₁ᵤ à f₁₀) et pour une troisième fonction de balayage à l'intérieur d'une troisième bande de fréquences (f₂ᵤ à f₂₀), sachant que, en fonction de l'analyse de l'intensité du mouillage de la vitre (1), une fréquence de balayage actuelle est réglée à une valeur si possible faible et sachant que, si un changement de bande de fréquences est nécessaire en cas de commutation d'une fonction de balayage à une autre, la fréquence de balayage actuelle est augmentée d'un nombre déterminé « n » de cycles de balayage par minute en cas de passage de la deuxième bande de fréquences (f₁ᵤ à f₁₀) vers la troisième bande de fréquences de balayage (f₂ᵤ à f₂₀) ou est diminuée d'un nombre déterminé « m » de cycles de balayage par minute en cas de passage de la troisième bande de fréquences (f₂ᵤ à f₂₀) vers la deuxième bande de fréquences (f₁ᵤ à f₁₀).

2. Dispositif de commande pour le fonctionnement d'un essuie-glace dans un véhicule automobile selon la revendication 1, **caractérisé en ce que**, en cas de commutation de 1a deuxième ou troisième fonction de balayage vers la première fonction de balayage, la durée du cycle de balayage correspondante de la fréquence de balayage actuelle commandée est prise en compte pour le mode de balayage isolé ou la fréquence de balayage actuelle correspondante est prise en compte pour le mode de balayage continu.

3. Dispositif de commande pour le fonctionnement d'un essuie-glace dans un véhicule automobile selon la revendication 1, **caractérisé en ce que**, en cas de commutation de la première fonction de balayage vers la deuxième ou la troisième fonction de balayage, lorsque la durée du cycle de balayage actuelle correspond à une fréquence de balayage actuelle qui est située entre la deuxième et la troisième bande de fréquences (entre f₁ᵤ et f₂₀), la fréquence de balayage actuelle est soit augmentée de « z » cycles de balayage par minute lorsque l'on passe de la première fonction de balayage vers la troisième fonction de balayage, soit elle est diminuée de « z » cycles de balayage par minute lorsque l'on passe de la première fonction de balayage vers la deuxième fonction de balayage, la valeur numérique de « z » étant prédéfinie de telle sorte que la nouvelle fréquence de balayage se situe, après la commutation, dans la bande de fréquences souhaitée.

4. Dispositif de commande pour le fonctionnement d'un essuie-glace dans un véhicule automobile selon la revendication 1, **caractérisé en ce que**, dans un mode de service d'urgence, l'unité électronique d'analyse (3) commande, en présence de la première fonction de balayage, une durée de cycle de balayage fixe et une durée de pause fixe entre deux cycles de balayage et, en présence de la deuxième fonction de balayage, un mode de balayage continu avec une première fréquence de balayage fixe et, en présence de la troisième fonction de balayage, un mode de balayage continu avec une deuxième fréquence de balayage fixe, la différence entre la première et la deuxième fréquence de balayage fixe correspondant à « n » cycles de balayage par minute.

5. Dispositif de commande pour le fonctionnement d'un essuie-glace dans un véhicule automobile selon la revendication 1, **caractérisé en ce que** l'intensité du mouillage de la vitre (1) est aussi analysée pendant la fonction de balayage « arrêt », qui correspond à un essuie-glace déconnecté.
